# EUROPEAN PATENT SPECIFICATION

(11) **EP 4 160 264 B1**
(45) Date of publication and mention of the grant of the patent: **16.04.2025**
(21) Application number: 21200173.9
(22) Date of filing: 30.09.2021
(51) Int. Cl.: G01S 7/489, G01S 7/497

(54) **LIDAR SYSTEM WITH REFERENCE RECEIVER CHANNEL, SUITABLE OPTICAL RECEIVER AND CORRESPONDING LIDAR OPERATING METHOD**
LIDAR-SYSTEM MIT REFERENZ-EMPFANGSKANAL, GEEIGNETER OPTISCHER EMPFÄNGER UND ENTSPRECHENDES LIDAR-BETRIEBSVERFAHREN
SYSTEME LIDAR AVEC CANAL DE RECEPTION DE REFERENCE, RECEPTEUR OPTIQUE ADAPTE ET PROCEDE DE FONCTIONNEMENT LIDAR CORRESPONDANT

(43) Date of publication of application: 05.04.2023
(73) Proprietor: Renesas Electronics America Inc., Milpitas, California 95035 (US)
(72) Inventor: SCHIAPPELLI, Fulvio, 81479 München (DE); TAVANO, Giuseppe, 80992 München (DE)
(74) Representative: Lippert Stachow Patentanwälte Rechtsanwälte Partnerschaft mbB

(56) References cited:
- CH-A5- 695 516
- DE-A1- 2 403 052
- US-A- 4 068 222
- US-A1- 2021 223 398

## Description

The invention relates to a light detection and ranging system. The invention further relates to an optical receiver system for a light detection and ranging system and a method for operating a light detection and ranging system.

Light detection and ranging (Lidar) systems, also called laser detection and ranging (Ladar) systems, measure the distance to a target by illuminating the target with pulsed laser light and measuring the reflected pulses with an optical sensor.

Differences in laser return times and wavelength can then be used to make 3-D representations of the target. Lidar systems have become popular in automotive applications, for example in advanced safety systems. A lidar systems is for example used to scan the surroundings of a car to detect any obstacles on a collision course with the car and issue a warning to the driver and/or to initiate an emergency brake. Lidar systems are often used in autonomous cars for controlling and navigation purposes. In such automotive applications, it is essential that the Lidar systems is highly available and precise with a minimum of detection errors.

The emitting system of the light detection and ranging system comprises a light source, particularly a laser source like a laser diode, for emitting the light signal to the surroundings of the light detection and ranging system.

This emitting light signal is reflected or scattered by objects in the surroundings of the light detection and ranging system.

The optical receiver system of the light detection and ranging system usually comprises or is connected to a string of optical sensors, which are for example arranged in the front part of an automobile. For example, the optical receiver system is arranged inside the automobile and connected to the string of optical sensors via a cable. The optical receiver system comprises at least one optical receiver channel, which is connectable to a respective optical sensor. Usually, the optical receiver system comprises a separate optical receiver channel for each optical sensor.

The optical receiver system amplifies the signal of the optical sensor before processing the optical sensor signal. The amplified optical sensor signal is usually converted from the analog domain to the digital domain by an analog-to-digital converter and afterwards being processed by a digital signal processor. Therefore, each optical receiver channel comprises a separate amplifier system for amplifying the respective optical sensor signals.

The different optical receiver channels of the optical receiver system ideally have matching amplification characteristics (gain), i.e. providing each the same result at the output in response to an identical current pulse from the optical sensor. Usually, the amplification characteristics are trimmed at low frequency, to ensure a good matching between the different optical receiver channels. However, another source of mismatch between the different optical receiver channels is represented by a mismatch in the optical sensors (photodiodes) responsivity, i.e. the ration of the generated current in response to incident light power. Thus, the output of the photo sensors in response to the same light intensity may differ from each other. This results in a different output, even for perfectly matched optical receiver channels.

Since there is no guarantee that the optical sensors used in a light detection and ranging system are selected from lots of matched devices, this mismatch between different optical sensors cannot be avoided. Furthermore, this mismatch can also not be trimmed out for each optical receiver channel using ATE (Automated Test Equipment), as the optical sensors are normally added to the light detection and ranging system by the final customer, for example car manufacturer. In addition, different customers most likely use different optical sensors, resulting in a different behaviour of the same light detection and ranging system. Finally, the light detection and ranging system, particularly the optical sensors and/or amplifiers of the optical receiver channels, are aging respectively stressed over the lifetime and may lead to a further mismatch between the output of the optical receiver channels in response to identical inputs.

On the other hand, high performance Lidar systems, as used in autonomous cars for controlling and navigation purposes, must be highly available with a minimum of detection errors and fulfil certain Automotive Safety Integrity Levels (ASILs), like e.g. an error below 9, 6 or 3 electrical degree.

Light detection and ranging systems are for example disclosed in US 4,068,222 A, CH 695 516 A5, DE 24 03 052 A1 or US 2021/223398 A1.

It is therefore an object of the present invention to provide a light detection and ranging system which is highly available with a minimum of detection errors by eliminating receiver channel mismatch.

The object is solved by a light detection and ranging system comprising:
at least one first light source for emitting a light signal to the surroundings of the light detection and ranging system,
multiple receiving optical sensors for receiving a light signal from the surroundings of the light detection and ranging system, and
an optical receiver system for processing the signals of the multiple receiving optical sensors, wherein the optical receiver system comprises a separate receiver channel for each receiving optical sensor, each separate receiver channel comprising an amplifier with an adjustable gain for amplifying the signal of the corresponding receiving optical sensor,
wherein the light detection and ranging system further comprises a second light source for emitting a light signal directly to a reference receiver channel and the multiple receiving optical sensors,
wherein the optical receiver system comprises the reference receiver channel and at least one comparator for comparing the output of the reference receiver channel and the output of each of the separate receiver channels, the reference receiver channel comprising a reference optical sensor and a reference amplifier,
and wherein the at least one comparator is configured to adjust the gain of the amplifiers of each separate receiver channel based on the result of the comparison of the output of the reference receiver channel and the output of the corresponding separate receiver channel.

According to the present invention, a mismatch between the multiple receiver channels of the optical receiver system is avoided by comparing the output of each receiver channel to the output of a reference receiver channel. Based on this comparison, the gain of the amplifiers of the multiple receiver channels can be adjusted so that the output of each receiver channel corresponds to the output of the reference receiver channel. Since the reference optical sensor of the reference receiver channel and the optical sensors connected to the multiple receiver channels are illuminated by the same light signal emitted from the second light source, the multiple receiver channels provide identical output to the same light signal after the gains of the amplifiers of the receiver channels have been adjusted by the light detection and ranging system of the present invention.

The present invention provides an online detection and correction of multiple sources of mismatch between different receiver channels of the optical receiver system in the overall receiver channel response during the whole lifetime of the light detection and ranging system. It ensures proper operation of the signal acquisition and processing channels of the light detection and ranging system with matched behaviour and thus higher predictability, accuracy and resolution. It further allows flexibility for the customers in choosing optical sensors like photodiodes, as the possible mismatches are detected and compensated during light detection and ranging system operation, regardless of the specific optical sensor responsivity.

The emitted first light signal and/or the emitted second light signal is preferably a light pulse with a defined characteristic, particularly wavelength, duration and form. The first light signal and the second light signal can be identical or different.

Pursuant to a variant of the invention, the multiple receiver channels and the reference receiver channel further comprise a buffer, an analog-to-digital converter and/or a signal processing unit, particularly digital signal processing unit. Particularly, the multiple receiver channels and the reference receiver channel each comprise the same elements. Since the output of each receiver channel is compared to the output of the reference receiver channel even mismatches due to the additional components is trimmed out by the present invention.

According to an advantageous variant of the invention, the at least one first light source and the second light source are controlled by the light detection and ranging system and do not emit light simultaneously. Thus, an interference between both light signals is avoided, which further increases the accuracy of the light detection and ranging system. Particularly, the second light source emits light during dedicated time windows different from the time windows of the normal acquisition window, in which the at least one first light source emits light signals to the surroundings of the light detection and ranging system.

In a variant of the invention, the light detection and ranging system comprises a separate comparator for each separate receiver channel, for comparing the output of the reference receiver channel to the output of the corresponding receiver channel. Thus, the output of each receiver channel can be compared to the output of the reference receiver channel in parallel, which reduces the necessary time to trim out the mismatch between the multiple receiver channel, particularly compared to a serial comparison of the output of the multiple receiver channels to the output of the reference receiver channel.

According to a variant of the invention, the amplifier of each optical receiver channel and the reference receiver channel is a transimpedance amplifier. Additionally or alternatively, the receiving optical sensors of the multiple optical receiver channels and the reference receiver channel are photodiodes and/or the first light source and/or the second light source is a laser source.

Pursuant to a further variant of the invention, the light detection and ranging system further comprises sender optics and/or receiver optics for adjusting light emitting characteristics and/or light receiving characteristics of the light detection and ranging system. The optics particularly refer to the emitting of the light signal from the at least one first light source to the surroundings of the light detection and ranging system and receiving light signal from the surroundings of the light detection and ranging system. The second light signal emitted from the second light source is preferably emitted directly within the light detection and ranging system to the optical sensors and reference optical sensor.

In a preferred variant of the invention, the optical receiver system is implemented in an integrated circuit. Thus, all components of the optical receiver system are contained in a single integrated circuit (IC). This reduces susceptibility to external noise. The multiple receiver channels of this integrated circuit are for example connected to the optical sensors for receiving light signals from the surroundings of the light detection and ranging system. Alternatively, the optical sensors for receiving light signals from the surroundings of the light detection and ranging system can also be integrated into the integrated circuit.

The object is further solved by an optical receiver system for a light detection and ranging system according to the present invention, wherein the optical receiver system comprises the reference receiver channel and at least one comparator for comparing the output of the reference receiver channel and the output of each of the separate receiver channels, the reference receiver channel comprising a reference optical sensor and a reference amplifier, and wherein the at least one comparator is configured to adjust the gain of the amplifiers of each separate receiver channel based on the result of the comparison of the output of the reference receiver channel and the output of the corresponding separate receiver channel. Thus, the optical receiver system provides all necessary components for comparing the output of the multiple receiver channels to the output of the reference receiver channel and adjust the gain of the amplifiers of the multiple receiver channels to trim out any mismatch between the multiple receiver channels. Other components of the light detection and ranging system, like e.g. the optical sensors, the first light source and/or second light source might be connected to the optical receiver channel at a later stage, e.g. at the customer site during assembly of a vehicle, due complete the light detection and ranging system.

The object is further solved by a method for operating a light detection and ranging system comprising the steps of: emitting a first light signal to the surroundings of the light detection and ranging system,
receiving a light signal from the surroundings of the light detection and ranging system using multiple receiving optical sensors,
processing the signal of the receiving optical sensors by separate receiver channels of an optical receiver system of the light detection and ranging system, wherein the processing comprises at least amplifying the signal of the receiving optical sensors by the separate receiver channels,
wherein the method further comprises the steps of:
   emitting a second light signal directly to a reference receiver channel and the multiple receiving optical sensors,
   comparing the output of the reference receiver channel and the output of each of the separate receiver channels,
   and adjusting the gain of the amplifiers of each separate receiver channel based on the result of the comparison of the output of the reference receiver channel and the output of the corresponding separate receiver channel.

According to the present invention, a mismatch between the multiple receiver channels of the optical receiver system is avoided by comparing the output of each receiver channel to the output of a reference receiver channel. Based on this comparison, the gain of the amplifiers of the multiple receiver channels can be adjusted so that the output of each receiver channel corresponds to the output of the reference receiver channel. Since the reference optical sensor of the reference receiver channel and the optical sensors connected to the multiple receiver channels are illuminated by the same light signal emitted from the second light source, the multiple receiver channels provide identical output to the same light signal after the gains of the amplifiers of the receiver channels have been adjusted by the method of operating light detection and ranging system according to the present invention.

The present invention provides an online detection and correction of multiple sources of mismatch between different receiver channels of the optical receiver system in the overall receiver channel response during the whole lifetime of the light detection and ranging system. It ensures proper operation of the signal acquisition and processing channels of the light detection and ranging system with matched behaviour and thus higher predictability, accuracy and resolution. It further allows flexibility for the customers in choosing optical sensors like photodiodes, as the possible mismatches are detected and compensated during light detection and ranging system operation, regardless of the specific optical sensor responsivity.

The emitted first light signal and/or the emitted second light signal is preferably a light pulse with a defined characteristic, particularly wavelength, duration and form. The first light signal and the second light signal can be identical or different. Pursuant to a variant of the invention, the processing of the signal of the receiving optical sensors further comprises buffering the signal, converting the signal from the analog domain to the digital domain and/or digitally processing the signal. Particularly, the multiple receiver channels and the reference receiver channel each execute the same processing steps. Since the output of each receiver channel is compared to the output of the reference receiver channel even mismatches due to the additional processing steps is trimmed out by the present invention.

According to an advantageous variant of the invention, the first light signal and the second light signal are not emitted simultaneously. Thus, an interference between both light signals is avoided, which further increases the accuracy of the method for operating a light detection and ranging system.

Particularly, the second light source emits light during dedicated time windows different from the time windows of the normal acquisition window, in which the at least one first light source emits light signals to the surroundings of the light detection and ranging system.

Pursuant to a further variant of the invention, the signal of the reference receiver channel and each optical receiver channel are compared in parallel, preferably by separate comparators. Since the output of each receiver channel is compared to the output of the reference receiver channel in parallel, the necessary time to trim out the mismatch between the multiple receiver channel is reduced, particularly compared to a serial comparison of the output of the multiple receiver channels to the output of the reference receiver channel.

According to a variant of the invention, the method is performed continuously during operation of the light detection and ranging system. Since the method is performed continuously even a mismatch between the multiple receiver channels due to degradation over the lifetime of the light detection and ranging system can be trimmed out by the inventive method.

Pursuant to a variant of the invention, the steps of emitting, comparing and adjusting, particularly the comparison between the output of the reference receiver channel and the output of the multiple receiver channels, is performed in predetermined intervals. It is sufficient to perform the inventive method in predetermined intervals as a mismatch between the multiple receiver channels is usually not a dynamic effect but only changing slowly over time.

In the following, the invention will be further explained with respect to the embodiments shown in the figures. It shows:
- Fig. 1: a block diagram of an embodiment of a light detection and ranging system according to the invention,
- Fig. 2: a detailed view of the optical receiver system of Fig. 1, and
- Fig. 3: a detailed view of another embodiment of an optical receiver system.

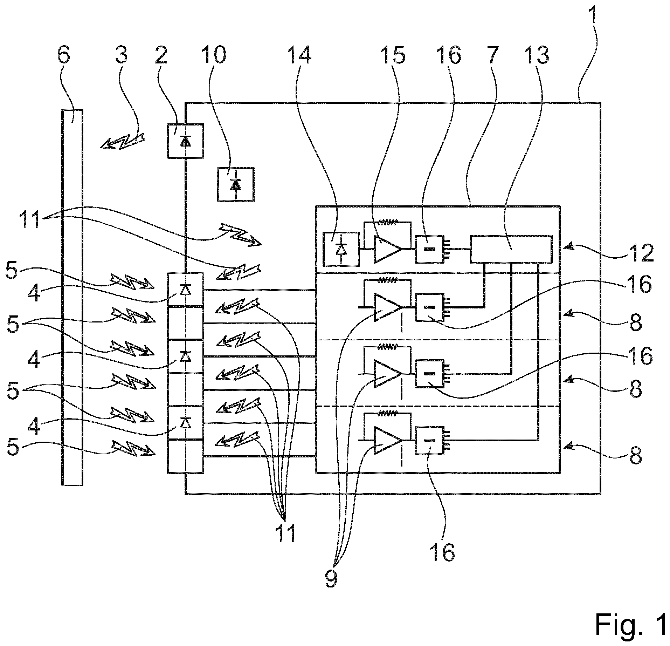

Fig. 1 shows a block diagram of an exemplary embodiment of a light detection and ranging system 1 according to the present invention.

The light detection and ranging system 1 comprises a first light source 2 for emitting a light signal to the surroundings of the light detection and ranging system 1. The first light source 2 is for example a laser source that emits laser pulses to the surroundings of the light detection and ranging system 1.

The emitted light signal 3 hits objects 6 in the surroundings of the light detection and ranging system 1 and is reflected or scattered back to the light detection and ranging system 1. These light signals from the surroundings reflected or scattered back to the light detection and ranging system 1 are indicated in Fig. 1 by reference 5.

The light detection and ranging system 1 further comprises multiple receiving optical sensors 4 for receiving the light signals 5 from the surroundings of the light detection and ranging system 1. These receiving optical sensors 4 are for example photodiodes. The receiving optical sensors 4 are for example arranged in the front part of a vehicle.

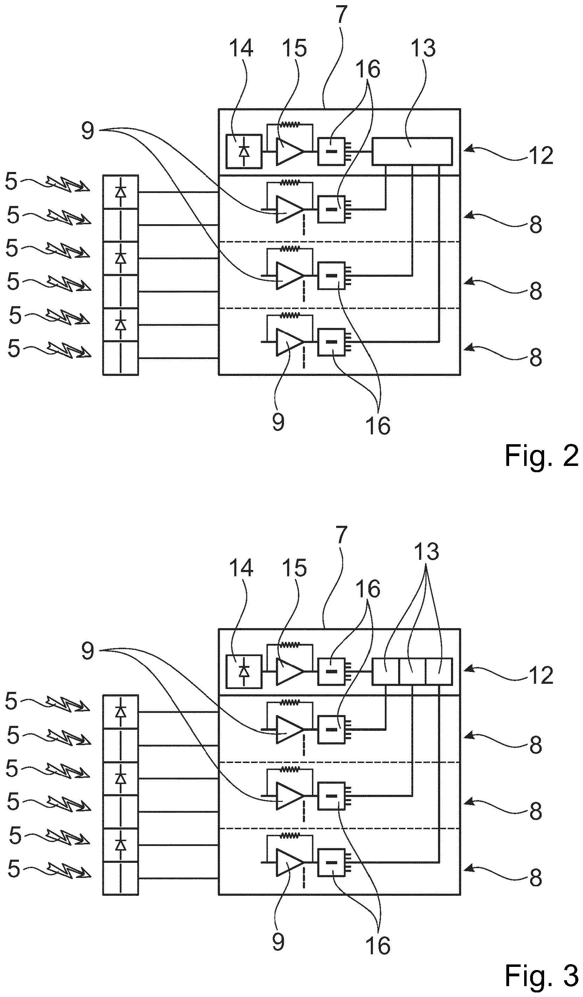

The signals of the multiple receiving optical sensors 4 are processed by an optical receiver system 7 of the light detection and ranging system 1. A detailed view of the optical receiver system 7 of the light detection and ranging system 1 of Fig. 1 is shown in Fig. 2. The optical receiver system 7 is preferably implemented in a single integrated circuit.

The optical receiver system 7 comprises a separate receiver channel 8 for each receiving optical sensor 4. In Figs. 1 and 2, the separate receiver channels 8 are separated by dashed lines. Each separate receiver channel 8 comprises at least an amplifier 9 for amplifying the signal of the corresponding receiving optical sensor 4. The amplifiers 9 have an adjustable gain, to adjust the amplification of the signal of the corresponding receiving optical sensor 4. According to the embodiment shown in Fig. 1, each receiver channel further comprises a signal processing block 16, which for example comprises a buffer, an analog-to-digital converter and/or a signal processing unit.

According to the present invention, the light detection and ranging system 1 further comprises a second light source 10, like a laser source, for emitting a light signal 11 directly to a reference receiver channel 12 of the optical receiver system 7 and the multiple receiving optical sensors 4. The reference receiver channel 12 comprises a reference optical sensor 14 and a reference amplifier 15. Like the separate receiver channels 8, the reference receiver channel 12 also comprises a signal processing block 16 comprising a buffer, an analog-to-digital converter and/or a signal processing unit.

The optical receiver system 7 further comprises a comparator 13 for comparing the output of the reference receiver channel 12 and the output of each of the separate receiver channels 8. The comparator 13 adjusts the gain of the amplifiers 9 of each separate receiver channel 8 based on the result of the comparison of the output of the reference receiver channel 12 and the output of the corresponding separate receiver channel 8. The comparator 13 adjusts the gain of the amplifiers of the separate receiver channels 8 in such a way, that the output of each separate receiver channel 8 corresponds to the output of the reference receiver channel 12. Thus, each separate receiver channel 8 provides the same output to the same light signal 11, i.e. the light signal 11 emitted by the second light source 10.

According to the embodiment shown in Figs. 1 and 2, the optical receiver system 7 comprises one comparator 13 for comparing the output of the reference receiver channel 12 and the output of each of the separate receiver channels 8. This comparison can be performed serially or at least partially in parallel. The comparator 13 is preferably part of the optical receiver system 7 but could also be a separate part of the light detection and ranging system 1.

The first light source 2 and the second light source 10 are controlled by the light detection and ranging system 1 and do not emit light simultaneously. Thus, an interference between the emitted light signals 3 and 11 and processing of the light signals 5 from the surroundings and light signals 11 from the second light source 10 can be avoided.

The amplifiers 9 of the separate receiver channels 8 and the reference amplifier 15 of the reference receiver channel 12 are for example transimpedance amplifiers. The receiving optical sensors 4 of the separate receiver channels 8 and the reference optical sensor 14 of the reference receiver channel 12 are for example photodiodes.

The light detection and ranging system 1 can further comprise sender optics and/or receiver optics (not shown) for adjusting light emitting characteristics and/or light receiving characteristics of the light detection and ranging system 1.

Fig. 3 shows a detailed view of another embodiment of an optical receiver system 7. The optical receiver system 7 shown in Fig. 3 differs from the optical receiver system 7 shown in Fig. 2 in that the optical receiver system 7 comprises a separate comparator 13 for each separate receiver channel 8. Thus, the outputs of all separate receiver channels 8 can be compared fully in parallel to the output of the reference receiver channel 12 by the multiple comparators 13. Again, the comparators 13 are not necessarily part of the optical receiver system 7 but could also be a separate part of the light detection and ranging system 1. With respect to all other features the optical receiver system 7 of Fig. 3 corresponds to the optical receiver system 7 of Fig. 2 and can be for example used in a light detection and ranging system 1 as shown in Fig. 1.

### List of reference numerals

- 1: light detection and ranging system
- 2: first light source
- 3: emitted light signal (first light source)
- 4: receiving optical sensor
- 5: light signal from the surroundings of the light detection and ranging system
- 6: object
- 7: optical receiver system
- 8: receiver channel
- 9: amplifier
- 10: second light source
- 11: emitted light signal (second light source)
- 12: reference receiver channel
- 13: comparator
- 14: reference optical sensor
- 15: reference amplifier
- 16: signal processing block (buffer, ADC, CPU)

## Claims

1. A light detection and ranging system (1) comprising:
at least one first light source (2) for emitting a light signal (3) to the surroundings of the light detection and ranging system (1),
multiple receiving optical sensors (4) for receiving a light signal (5) from the surroundings of the light detection and ranging system (1), and
an optical receiver system (7) for processing the signals of the multiple receiving optical sensors (4), wherein the optical receiver system (7) comprises a separate receiver channel (8) for each receiving optical sensor (4), each separate receiver channel (8) comprising an amplifier (9) with an adjustable gain for amplifying the signal of the corresponding receiving optical sensor (4),
wherein the light detection and ranging system (1) further comprises a second light source (10) for emitting a light signal (11) directly to a reference receiver channel (12) and the multiple receiving optical sensors (4),
wherein the optical receiver system (7) comprises the reference receiver channel (12) and at least one comparator (13) for comparing the output of the reference receiver channel (12) and the output of each of the separate receiver channels (8), the reference receiver channel (12) comprising a reference optical sensor (14) and a reference amplifier (15),
and wherein the at least one comparator (13) is configured to adjust the gain of the amplifiers (9) of each separate receiver channel (8) based on the result of the comparison of the output of the reference receiver channel (12) and the output of the corresponding separate receiver channel (8).

2. The light detection and ranging system (1) according to claim 1,
wherein the multiple receiver channels (8) and the reference receiver channel (12) further comprise a buffer, an analog-to-digital converter and/or a signal processing unit.

3. The light detection and ranging system (1) according to claim 1 or claim 2,
wherein the at least one first light source (2) and the second light source (10) are controlled by the light detection and ranging system (1) and do not emit light simultaneously.

4. The light detection and ranging system (1) according to any of claims 1 to 3,
comprising a separate comparator (13) for each separate receiver channel (8), for comparing the output of the reference receiver channel (12) to the output of the corresponding receiver channel (8).

5. The light detection and ranging system (1) according to any of claims 1 to 4,
wherein the amplifier (9, 15) of each optical receiver channel (8) and the reference receiver channel (12) is a transimpedance amplifier.

6. The light detection and ranging system (1) according to any of claims 1 to 5,
wherein the receiving optical sensors (4, 14) of the multiple optical receiver channels (8) and the reference receiver channel (12) are photodiodes and/or the first light source (2) and/or the second light source (10) is a laser source.

7. The light detection and ranging system (1) according to any of claims 1 to 6,
further comprising sender optics and/or receiver optics for adjusting light emitting characteristics and/or light receiving characteristics of the light detection and ranging system (1).

8. The light detection and ranging system (1) according to any of claims 1 to 7,
wherein the optical receiver system (7) is implemented in an integrated circuit.

9. An optical receiver system (7) for a light detection and ranging system (1) according to any of claims 1 to 8,
wherein
the optical receiver system (7) comprises the reference receiver channel (12) and at least one comparator (13) for comparing the output of the reference receiver channel (12) and the output of each of the separate receiver channels (8), the reference receiver channel (12) comprising a reference optical sensor (14) and a reference amplifier (15),
and wherein the at least one comparator (13) is configured to adjust the gain of the amplifiers (9) of each separate receiver channel (8) based on the result of the comparison of the output of the reference receiver channel (12) and the output of the corresponding separate receiver channel (8).

10. A method for operating a light detection and ranging system (1) comprising the steps of:
emitting a first light signal (3) to the surroundings of the light detection and ranging system (1),
receiving a light signal (5) from the surroundings of the light detection and ranging system (1) using multiple receiving optical sensors (4),
processing the signal of the receiving optical sensors (4) by separate receiver channels (8) of an optical receiver system (7) of the light detection and ranging system (1), wherein the processing comprises at least amplifying the signal of the receiving optical sensors (4) by the separate receiver channels (8),
wherein the method further comprises the steps of:
emitting a second light signal (11) directly to a reference receiver channel (12) and the multiple receiving optical sensors (4),
comparing the output of the reference receiver channel (12) and the output of each of the separate receiver channels (8),
and adjusting the gain of the amplifiers (9) of each separate receiver channel (8) based on the result of the comparison of the output of the reference receiver channel (12) and the output of the corresponding separate receiver channel (8).

11. The method according to claim 10,
wherein the processing of the signal of the receiving optical sensors (4) further comprises buffering the signal, converting the signal from an analog domain to the digital domain and/or digitally processing the signal.

12. The method according to claim 10 or claim 11,
wherein the first light signal (3) and the second light signal (11) are not emitted simultaneously.

13. The method according to any of claims 10 to 12,
wherein the signal of the reference receiver channel (12) and each optical receiver channel (8) are compared in parallel.

14. The method according to any of claims 10 to 13,
wherein the method is performed continuously during operation of the light detection and ranging system (1).

15. The method according to any of claims 10 to 14,
wherein the steps emitting, comparing and adjusting are performed in predetermined intervals.

## Patentansprüche

1. Lichterkennungs- und Entfernungsmesssystem (1), das Folgendes umfasst:
mindestens eine erste Lichtquelle (2) zum Aussenden eines Lichtsignals (3) in die Umgebung des Lichterkennungs- und Entfernungsmesssystems (1),
mehrere optische Empfangssensoren (4) zum Empfangen eines Lichtsignals (5) aus der Umgebung des Lichterkennungs- und -entfernungsmesssystems (1), und
ein optisches Empfangssystem (7) zum Verarbeiten der Signale der mehreren optischen Empfangssensoren (4), wobei das optische Empfangssystem (7) einen separaten Empfangskanal (8) für jeden optischen Empfangssensor (4) umfasst, wobei jeder separate Empfangskanal (8) einen Verstärker (9) mit einer einstellbaren Verstärkung zum Verstärken des Signals des entsprechenden optischen Empfangssensors (4) umfasst,
wobei das Lichtdetektions- und Entfernungsmesssystem (1) ferner eine zweite Lichtquelle (10) umfasst, um ein Lichtsignal (11) direkt an einen Referenzempfangskanal (12) und die mehreren optischen Empfangssensoren (4) auszusenden,
wobei das optische Empfangssystem (7) den Referenzempfangskanal (12) und mindestens einen Komparator (13) zum Vergleichen des Ausgangs des Referenzempfangskanals (12) und des Ausgangs jedes der separaten Empfangskanäle (8) umfasst, wobei der Referenzempfangskanal (12) einen optischen Referenzsensor (14) und einen Referenzverstärker (15) umfasst,
und wobei der mindestens eine Komparator (13) derart konfiguriert ist, dass er die Verstärkung der Verstärker (9) jedes separaten Empfangskanals (8) auf der Grundlage des Ergebnisses des Vergleichs des Ausgangs des Referenzempfangskanals (12) und des Ausgangs des entsprechenden separaten Empfangskanals (8) einstellt.

2. Lichterkennungs- und Entfernungsmesssystem (1) nach Anspruch 1,
wobei die mehreren Empfangskanäle (8) und der Referenzempfangskanal (12) ferner einen Puffer, einen Analog-Digital-Wandler und/oder eine Signalverarbeitungseinheit umfassen.

3. Lichterkennungs- und Entfernungsmesssystem (1) nach Anspruch 1 oder Anspruch 2,
wobei die mindestens eine erste Lichtquelle (2) und die zweite Lichtquelle (10) von dem Lichterkennungs- und Entfernungsmesssystem (1) gesteuert werden und nicht gleichzeitig Licht aussenden.

4. Lichterkennungs- und Entfernungsmesssystem (1) nach einem der Ansprüche 1 bis 3,
mit einem separaten Komparator (13) für jeden separaten Empfangskanal (8) zum Vergleichen des Ausgangs des Referenzempfangskanals (12) mit dem Ausgang des entsprechenden Empfangskanals (8).

5. Lichtdetektions- und Entfernungsmesssystem (1) nach einem der der Ansprüche 1 bis 4,
wobei der Verstärker (9, 15) jedes optischen Empfangskanals (8) und des Referenzempfangskanals (12) ein Transimpedanzverstärker ist.

6. Lichterkennungs- und Entfernungsmesssystem (1) nach einem der Ansprüche 1 bis 5,
wobei die optischen Empfangssensoren (4, 14) der mehreren optischen Empfangskanäle (8) und des Referenzempfangskanals (12) Photodioden sind und/oder die erste Lichtquelle (2) und/oder die zweite Lichtquelle (10) eine Laserquelle ist.

7. Lichterkennungs- und Entfernungsmesssystem (1) nach einem der Ansprüche 1 bis 6,
ferner umfassend Sendeoptiken und/oder Empfangsoptiken zum Einstellen der Lichtsendeeigenschaften und/oder der Lichtempfangseigenschaften des Lichterkennungs- und - entfernungsmesssystems (1).

8. Lichterkennungs- und Entfernungsmesssystem (1) nach einem der Ansprüche 1 bis 7,
wobei das optische Empfangssystem (7) in einer integrierten Schaltung implementiert ist.

9. Optisches Empfangssystem (7) für ein Lichterkennungs- und Entfernungsmesssystem (1) nach einem der Ansprüche 1 bis 8,
wobei
das optische Empfangssystem (7) den Referenzempfangskanal (12) und mindestens einen Komparator (13) zum Vergleichen des Ausgangs des Referenzempfangskanals (12) und des Ausgangs jedes der separaten Empfangskanäle (8) umfasst, wobei der Referenzempfangskanal (12) einen optischen Referenzsensor (14) und einen Referenzverstärker (15) umfasst,
und wobei der mindestens eine Komparator (13) derart konfiguriert ist, dass er die Verstärkung der Verstärker (9) jedes separaten Empfangskanals (8) auf der Grundlage des Ergebnisses des Vergleichs des Ausgangs des Referenzempfangskanals (12) und des Ausgangs des entsprechenden separaten Empfangskanals (8) einstellt.

10. Verfahren zum Betrieb eines Lichterkennungs- und Entfernungsmesssystems (1), das die folgenden Schritte umfasst:
Aussenden eines ersten Lichtsignals (3) in die Umgebung des Lichterkennungs- und Entfernungsmesssystems (1),
Empfangen eines Lichtsignals (5) aus der Umgebung des Lichterkennungs- und Entfernungsmesssystems (1) unter Verwendung mehrerer optischer Empfangssensoren (4),
Verarbeiten des Signals der optischen Empfangssensoren (4) durch separate Empfangskanäle (8) eines optischen Empfangssystems (7) des Lichterfassungs- und Entfernungsmessungssystems (1), wobei das Verarbeiten zumindest ein Verstärken des Signals der optischen Empfangssensoren (4) durch die separaten Empfangskanäle (8) umfasst,
wobei das Verfahren ferner folgenden Schritte umfasst:
Aussenden eines zweiten Lichtsignals (11) direkt an einen Referenzempfangskanal (12) und die mehreren optischen Empfangssensoren (4),
Vergleichen des Ausgangs des Referenzempfangskanals (12) und des Ausgangs jedes der separaten Empfangskanäle (8),
und Einstellen der Verstärkung der Verstärker (9) jedes separaten Empfangskanals (8) auf der Grundlage des Ergebnisses des Vergleichens des Ausgangs des Referenzempfangskanals (12) und des Ausgangs des entsprechenden separaten Empfangskanals (8).

11. Verfahren nach Anspruch 10,
wobei das Verarbeiten des Signals der optischen Empfangssensoren (4) ferner ein Puffern des Signals, ein Umwandeln des Signals von einem analogen Bereich in den digitalen Bereich und/oder ein digitales Verarbeiten des Signals umfasst.

12. Verfahren nach Anspruch 10 oder Anspruch 11,
wobei das erste Lichtsignal (3) und das zweite Lichtsignal (11) nicht gleichzeitig ausgesendet werden.

13. Verfahren nach einem der Ansprüche 10 bis 12,
wobei das Signal des Referenzempfangskanals (12) und jedes optischen Empfangskanals (8) parallel verglichen werden.

14. Verfahren nach einem der Ansprüche 10 bis 13,
wobei das Verfahren kontinuierlich während des Betriebs des Lichterkennungs- und Entfernungsmesssystems (1) durchgeführt wird.

15. Verfahren nach einem der Ansprüche 10 bis 14,
wobei die Schritte Aussenden, Vergleichen und Einstellen in vorbestimmten Intervallen durchgeführt werden.

## Revendications

1. Système de détection et de télémétrie par la lumière (1) comprenant:
au moins une première source lumineuse (2) pour émettre un signal lumineux (3) dans l'environnement du système de détection et de télémétrie par la lumière (1),
plusieurs capteurs optiques de réception (4) pour recevoir un signal lumineux (5) provenant de l'environnement du système de détection et de télémétrie par la lumière (1), et
un système de réception optique (7) pour traiter les signaux des multiples capteurs optiques de réception (4), dans lequel le système de réception optique (7) comprend un canal de réception séparé (8) pour chaque capteur optique de réception (4), chaque canal de réception séparé (8) comprenant un amplificateur (9) avec un gain réglable pour amplifier le signal du capteur optique de réception correspondant (4),
le système de détection et de télémétrie par la lumière (1) comprend en outre une deuxième source lumineuse (10) pour émettre un signal lumineux (11) directement vers un canal de réception de référence (12) et les multiples capteurs optiques de réception (4),
le système de réception optique (7) comprend le canal de réception de référence (12) et au moins un comparateur (13) pour comparer la sortie du canal de réception de référence (12) et la sortie de chacun des canaux de réception séparés (8), le canal de réception de référence (12) comprenant un capteur optique de référence (14) et un amplificateur de référence (15),
et dans lequel l'au moins un comparateur (13) est configuré pour régler le gain des amplificateurs (9) de chaque canal de réception séparé (8) sur la base du résultat de la comparaison de la sortie du canal de réception de référence (12) et de la sortie du canal de réception séparé correspondant (8).

2. Système de détection et de télémétrie par la lumière (1) selon la revendication 1,
dans lequel les canaux de réception multiples (8) et le canal de réception de référence (12) comprennent en outre un tampon, un convertisseur analogique-numérique et/ou une unité de traitement des signaux.

3. Système de détection et de télémétrie par la lumière (1) selon la revendication 1 ou la revendication 2,
dans lequel l'au moins une première source lumineuse (2) et la seconde source lumineuse (10) sont contrôlées par le système de détection et de télémétrie par la lumière (1) et n'émettent pas de lumière simultanément.

4. Système de détection et de télémétrie par la lumière (1) selon l'une des revendications 1 à 3,
comprenant un comparateur séparé (13) pour chaque canal de réception séparé (8), pour comparer la sortie du canal de réception de référence (12) à la sortie du canal de réception correspondant (8).

5. Système de détection et de télémétrie par la lumière (1) selon l'une des revendications 1 à 4,
dans lequel l'amplificateur (9, 15) de chaque canal de réception optique (8) et du canal de réception de référence (12) est un amplificateur à transimpédance.

6. Système de détection et de télémétrie par la lumière (1) selon l'une des revendications 1 à 5,
dans lequel les capteurs optiques de réception (4, 14) des canaux de réception optiques multiples (8) et du canal de réception de référence (12) sont des photodiodes et/ou la première source de lumière (2) et/ou la seconde source de lumière (10) est une source laser.

7. Système de détection et de télémétrie par la lumière (1) selon l'une des revendications 1 à 6,
comprenant en outre des optiques d'émission et/ou des optiques de réception pour ajuster les caractéristiques d'émission de lumière et/ou les caractéristiques de réception de lumière du système de détection et de télémétrie par la lumière (1).

8. Système de détection et de télémétrie par la lumière (1) selon l'une des revendications 1 à 7,
le système de réception optique (7) est mis en œuvre dans un circuit intégré.

9. Système de réception optique (7) pour un système de détection et de télémétrie par la lumière (1) selon l'une des revendications 1 à 8,
dans lequel
le système de réception optique (7) comprend le canal de réception de référence (12) et au moins un comparateur (13) pour comparer la sortie du canal de réception de référence (12) et la sortie de chacun des canaux de réception séparés (8), le canal de réception de référence (12) comprenant un capteur optique de référence (14) et un amplificateur de référence (15),
et dans lequel l'au moins un comparateur (13) est configuré pour régler le gain des amplificateurs (9) de chaque canal de réception séparé (8) sur la base du résultat de la comparaison de la sortie du canal de réception de référence (12) et de la sortie du canal de réception séparé correspondant (8).

10. Méthode de fonctionnement d'un système de détection et de télémétrie par la lumière (1) comprenant les étapes suivantes:
émettre un premier signal lumineux (3) dans l'environnement du système de détection et de télémétrie par la lumière (1),
recevoir un signal lumineux (5) provenant de l'environnement du système de détection et de télémétrie par la lumière (1) à l'aide de plusieurs capteurs optiques de réception (4),
traiter le signal des capteurs optiques de réception (4) par des canaux de réception séparés (8) d'un système de réception optique (7) du système de détection et de télémétrie par la lumière (1), le traitement comprenant au moins amplifier du signal des capteurs optiques de réception (4) par les canaux de réception séparés (8),
dans laquelle la méthode comprend en outre les étapes suivantes:
émettre un second signal lumineux (11) directement vers un canal de réception de référence (12) et les multiples capteurs optiques de réception (4),
comparer la sortie du canal de réception de référence (12) et la sortie de chacune des canaux de réception séparées (8),
et régler le gain des amplificateurs (9) de chaque canal de réception séparé (8) sur la base du résultat de la comparaison de la sortie du canal de réception de référence (12) et de la sortie du canal de réception séparé correspondant (8).

11. Méthode selon la revendication 10,
Dans laquelle traiter le signal des capteurs optiques de réception (4) comprend en outre la mise en mémoire tampon du signal, convertir le signal du domaine analogique au domaine numérique et/ou traiter numériquement le signal.

12. Méthode selon la revendication 10 ou la revendication 11,
dans laquelle le premier signal lumineux (3) et le second signal lumineux (11) n'étant pas émis simultanément.

13. Méthode selon l'une des revendications 10 à 12,
dans laquelle le signal du canal de réception de référence (12) et de chaque canal de réception optique (8) est comparé en parallèle.

14. Méthode selon l'une des revendications 10 à 13,
dans laquelle la méthode est exécutée en continu pendant le fonctionnement du système de détection et de télémétrie par la lumière (1).

15. Méthode selon l'une des revendications 10 à 14,
dans laquelle les étapes d'émettre, de comparer et de régler sont effectuées à des intervalles prédéterminés.
